# EUROPÄISCHE PATENTSCHRIFT

(11) **EP 2 322 344 B1**
(45) Veröffentlichungstag und Bekanntmachung des Hinweises auf die Patenterteilung: **27.06.2012**
(21) Anmeldenummer: 10012433.8
(22) Anmeldetag: 19.05.2005
(51) Int. Cl.: B32B 3/28

(54) **Sandwichelement**
Sandwich element
Element de type sandwich

(30) Priorität: 19.05.2004 DE 102004024878
(43) Veröffentlichungstag der Anmeldung: 18.05.2011
(62) Teilanmeldung aus: 05743441.7
(73) Patentinhaber: lightweight solutions GmbH, 83043 Bad Aibling (DE)
(72) Erfinder: Schäpers, Michael, 83071 Stephanskirchen (DE)
(74) Vertreter: Müller-Boré & Partner Patentanwälte

(56) Entgegenhaltungen:
- DD-A- 23 219
- DE-A1- 2 463 067
- US-A- 3 963 813
- US-A- 5 972 477

## Beschreibung

Die vorliegenden Erfindung betrifft ein Sandwichelement mit ausgezeichneter Steifigkeit, Tragfähigkeit und extrem niedrigem Gewicht, ein Verfahren zu dessen Herstellung und dessen Verwendung im Rohbau, Hochbau, Fertigbau, Ausbau, Innenausbau, zum Schall- und Wärmeschutz, für Inneneinrichtungen, Möbel, für Türen und Türfüllungen, Dekorationen, im Fahrzeugbau, Caravanbau, Schiffsinnenausbau, Flugzeuginnenausbau, Landwirtschaft und in der Verpackungstechnik.

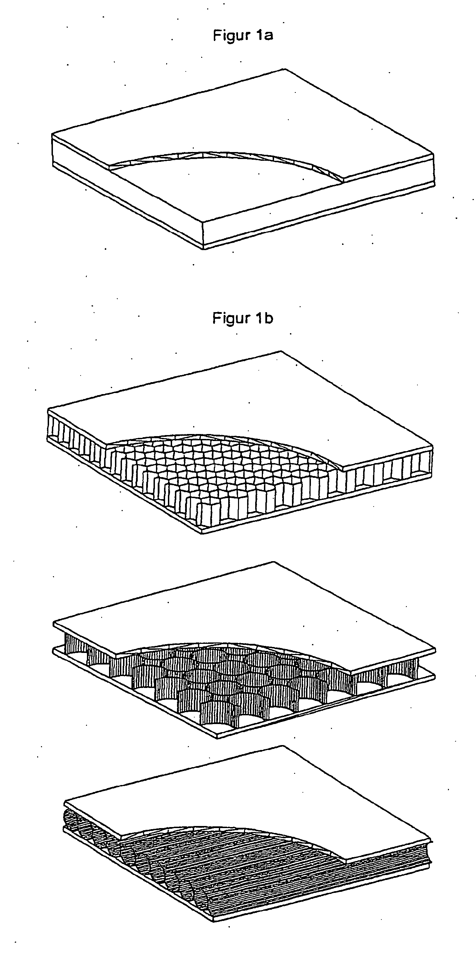

Im Stand der Technik sind Sandwichkonstruktionen mit homogenem Kern, z.B. aus aufgeschäumten Werkstoffen, und strukturiertem Kern, z.B. mit wabenförmiger, stegförmiger, wellblechförmiger oder tubusförmiger Struktur, bekannt. Zur Verdeutlichung der bislang bekannten Werkstoffe wird auf die Figuren 1 bis 4 verwiesen.

Als Sandwichkonstruktion bezeichnet man im allgemeinen ein Gebilde aus mehreren miteinander verbundenen Schichten mit unterschiedlichen Eigenschaften. Ebene plattenförmige Sandwichkonstruktionen bestehen üblicherweise aus drei Schichten mit zwei außenliegenden Häuten bzw. Deckschichten und einem dazwischen liegenden Kern (bzw. Mittellage). Ziel dieser Konstruktionen ist es, unter Einsparung von Material und Gewicht eine verbesserte Tragfähigkeit gegenüber den Ausgangsmaterialien zu erzielen. Sowohl die Deckschichten als auch die Kemschicht müssen hierbei verschiedene Kräfte und Beanspruchungen aufnehmen und in geeigneter Weise aufeinander abgestimmt sein. Mit anderen Worten hat der Kern die Hauptaufgabe, die beiden Deckschichten auf Abstand zu halten und dabei entsprechende Kräfte aufzunehmen. Ferner hat der Kern die Aufgabe, eine Schubübertragung zwischen den Deckschichten sicherzustellen, sowie die Deckschichten gegen Beulen und Knittern zu stabilisieren.

Die Verformungssteifigkeit einer Sandwichplatte wächst mit zunehmender Schubsteifigkeit des Kerns. Die Deckschichten haben die Aufgabe, das Biegemoment in Form eines Kräftepaares, d.h. sowohl Zug- als auch Druckkräfte, aufzunehmen.

Im Stand der Technik sind eine Reihe von Konstruktionen mit strukturiertem Kern bekannt die nach fertigungstechnischen (bzw. wirtschaftlichen) Gesichtspunkten konstruiert wurden. Weiterhin sind eine Reihe von Konstruktionen mit strukturiertem Kern bekannt, bei denen versucht wurde, die bei einer Belastung auftretenden Hauptspannungsachsen (die jedoch in dieser Form nur bei homogenen Kernschichten auftreten) durch die Geometrie der Kemschicht nachzubilden, um so eine gute Tragfähigkeit des Gesamtverbundes zu erreichen. Nachteil dieser im Stand der Technik bekannten Konstruktionen ist, daß es bei einigen dieser Sandwichkonstruktionen statische Schnitte gibt, an denen die gesamte Querkraft durch die Deckschichten übertragen werden muß, und sie damit der Sandwichtheorie nicht genügen. Ferner gibt es eine Reihe von fertigungstechnischen Problemen, die den Einsatz dieser Leichtwerkstoffe wirtschaftlich uninteressant machen bzw. einschränken.

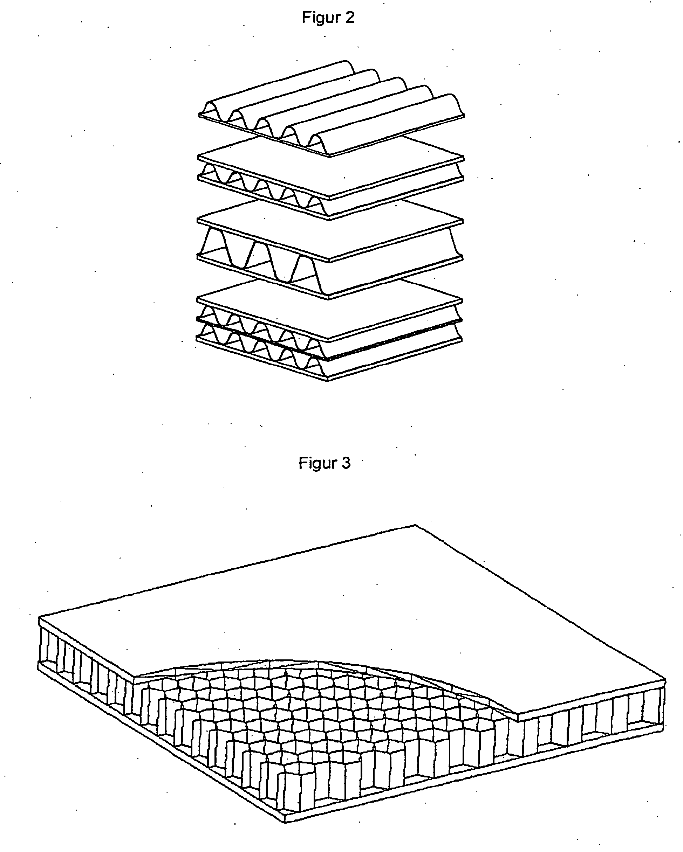

Bei Sandwichelementen mit einfach gekrümmten, schalenförmigen Mittellagen, d.h. Mittellagen, die eine Wellenform aufweisen (vgl. Figur 2), existieren in Längsrichtung statische Schnitte, in denen die Plattenquerkräfte nicht von der Mittellage abgetragen werden können. Derartige Platten verletzen das Prinzip der Sandwichtragwirkung. Die Kemschicht in dieser Struktur ist derart unterbrochen, daß die gesamte Querkraft an bestimmten Schnitten in Längsrichtung durch die Deckschicht abgetragen werden muß. Bei diesen Konstruktionen ist deshalb die Auslegung der Deckschichten auf eine zusätzliche Querkraftbeanspruchung erforderlich. Dies bedingt stärkere, schwerere und teurere Lösungen für die Deckschichten. Weiterhin haben sie den Nachteil, daß sie eine richtungsabhängige Tragwirkung aufweisen. Die Steifigkeit und Tragfähigkeit der Konstruktion ist in Längsrichtung deutlich höher als in Querrichtung.

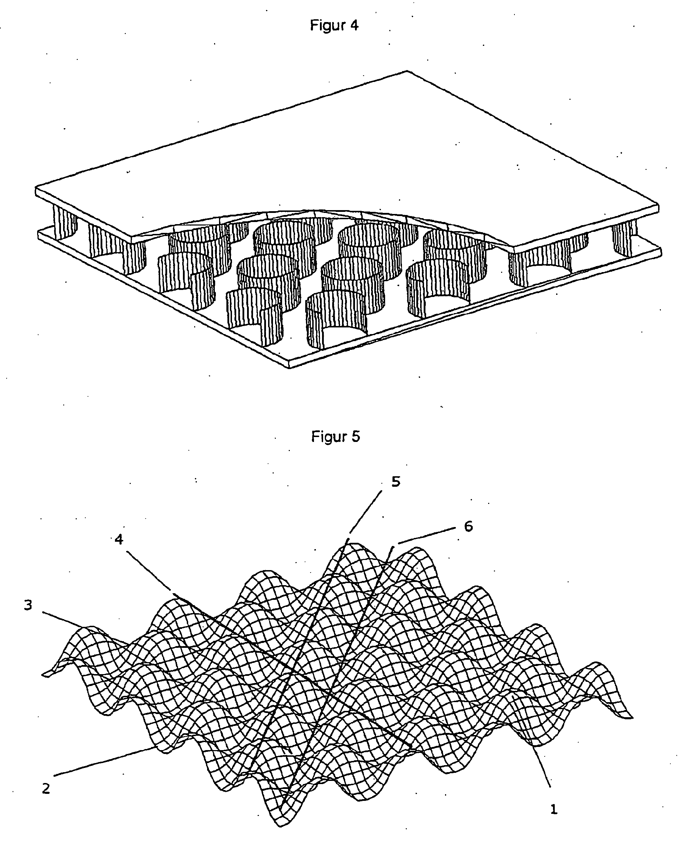

Bei Sandwichelementen mit zweifach gekrümmten, schalenförmigen Mittellagen, d.h. mit ausschließlich kuppel- bzw. noppenartigen Erhebungen, bzw. bei Sandwichelementen mit einfach gekrümmten Mittellagen in Form zylindrischer Erhebungen (vgl. Figur 4), existieren sowohl in Längsrichtung als auch in Querrichtung statische Schnitte, in denen die Plattenquerkräfte nicht von der Mittellage abgetragen werden können. Derartige Platten verletzen ebenfalls das Prinzip der Sandwichtragwirkung. Die Kemschicht in diesen Strukturen ist derart unterbrochen, daß die gesamte Querkraft an bestimmten Schnitten durch die Deckschichten abgetragen werden muß. Schneidet man die Platte genau zwischen den z.B. kuppelartigen Erhebungen durch, besteht die Platte an genau diesem Schnitt nur noch aus den Deckschichten. Der Querkraftverlauf im Kern ist also unterbrochen und muß daher von den Deckschichten aufgebracht werden. Diese Belastung muß zusätzlich zu den Zug- und Druckbeanspruchungen aufgebracht werden und trägt negativ zur Tragfähigkeit der Konstruktion bei bzw. erfordert stärkere, schwerere und teurere Lösungen für die Deckschichten.

Bislang bekannte Mittellagen, die Kräfte senkrecht zur Plattenebene an jedem Punkt bzw. jedem Schnitt aufnehmen können, weisen eine Wabenstruktur (vgl. Figur 3) oder einen massiven Kern auf.

Wabenkonstruktionen basieren auf dem Prinzip der Scheibentragwirkung. Die Kräfte können im Kern durch die aufrecht stehende Scheiben (sechs Scheiben bilden eine Wabe) nahezu ideal abgetragen werden. Wabenkonstruktionen zeichnen sich durch ein geringes Gewicht und eine hohe Druckfestigkeit aus, wodurch sie sich gegenüber anderen Leichtbaukonstruktionen durchsetzen konnten. Sandwichelemente mit Wabenstrukturen in der Mittellage weisen aber auch häufig das Problem auf, daß sie aufgrund der geringen Klebefläche zwischen Deckschicht und Mittellage ungenügende Querzugsfestigkeiten aufweisen, die bei weiteren Veredelungsschritten zu fertigungstechnischen Problemen führen können. Zur Verbesserung der Querzugfestigkeit und aus Stabilitätsgründen werden z.B. bei Papierwabenkonstruktionen für den Möbelbau massive und schwere Rahmenhölzer mit in die Konstruktion eingebracht. Durch die Verwendung der Rahmenhölzer erfolgt die Produktion meist in einem zeitaufwendigen Taktverfahren und nicht in einem kontinuierlichen Verfahren. Eine wirtschaftliche bzw. automatisierte Fertigung der Wabenplatten erfordert einen erheblichen maschinellen Aufwand.

Sandwichelemente mit einem massiven Kern weisen selbst bei Verwendung relativ leichter Materialien für den Kern ein häufig zu hohes Gesamtgewicht auf oder zeigen, beispielsweise bei der Verwendung von Schaumstoffen, ein ungenügendes Brandschutzverhalten.

Die US-A-3,963,813 beschreibt eine Lage mit spitzen, nadelförmigen Noppen, die nicht geeignet sind, Querkräfte abzutragen, sowie ein Verfahren zur Herstellung einer solchen Noppenbahn unter Verwendung von Nadeln.

Die der vorliegenden Erfindung zugrundeliegende technische Aufgabe besteht somit darin, ein Sandwichelement mit einem strukturierten Kern bereitzustellen, das eine ausgezeichnete Steifigkeit und Tragfähigkeit trotz sehr niedrigem Gewicht sowie eine richtungsunabhängige Tragwirkung aufweisen soll.

Diese Aufgabe wird durch die in den Ansprüchen gekennzeichneten Ausführungsformen gelöst.

Insbesondere stellt die vorliegende Erfindung ein Sandwichelement bereit, umfassend mindestens zwei Deckschichten und mindestens eine zwischen den Deckschichten angeordnete Mittellage in Form eines periodisch wiederkehrenden zweifach gekrümmten Schalentragwerks mit gegensinnigen Hauptkrümmungen.

Unter einer zwischen den Deckschichten angeordneten Mittellage in Form eines periodisch wiederkehrenden (bzw. im Raster wiederkehrenden) zweifach gekrümmten Schalentragwerks mit gegensinnigen Hauptkrümmungen versteht man gemäß der vorliegenden Erfindung eine dreidimensionale Mittellage, die kuppelartige Erhebungen und wannenartige Vertiefungen aufweist, wobei benachbarte kuppelartige Erhebungen jeweils über Sattelflächen (auch als Hyperparaboloid bezeichnet) miteinander verbunden sind und die wannenartigen Vertiefungen auch über Sattelflächen miteinander verbunden sind. Vorzugsweise
ist in einer derartigen dreidimensionalen Mittellage eine wannenartige Vertiefung von vier (direkt) benachbarten kuppelartigen Erhebungen und, umgekehrt, eine kuppelartige Erhebung von vier benachbarten wannenartigen Vertiefungen umgeben (vgl. beispielsweise Figur 5). Ferner ist eine wannenartige Vertiefung bzw. eine kuppelartige Erhebung von jeweils vier Sattelflächen umgeben.

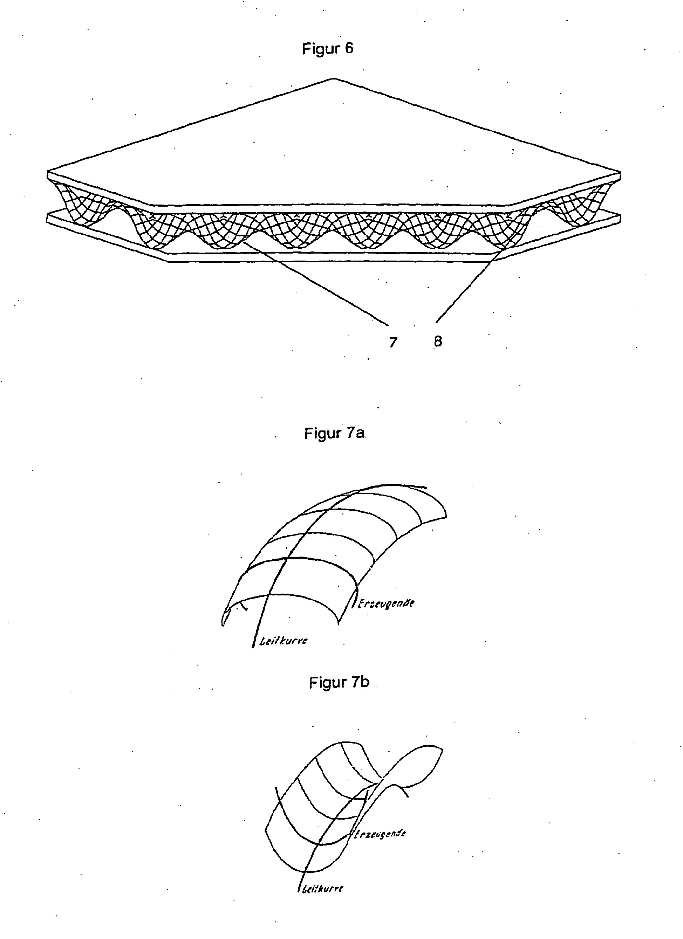

Die über Sattelflächen verbundenen kuppelartigen Erhebungen liegen vorzugsweise auf einer Gerade, die parallel versetzt zu einer Gerade verläuft, auf der die über Sattelflächen verbundenen wannenartigen Vertiefungen liegen, wobei in einem vorbestimmten Winkel zu den beiden vorstehend beschriebenen parallelen Geraden, der vorzugsweise etwa 45° beträgt (wobei jedoch auch andere Winkel realisierbar sind), wannenartige Vertiefungen und kuppelartige Erhebungen vorzugsweise auf derselben Gerade liegen (und eine wellenartige Form mit größerer Amplitude in Richtung dieser Gerade bilden). Zur Verdeutlichung wird auf die Figuren 5 und 6 verwiesen.

Unter dem Ausdruck "gegensinnige Hauptkrümmungen" versteht man gemäß der vorliegenden Erfindung die beiden in entgegengesetzte Richtungen weisenden Hauptkrümmungen, welche die Hauptkrümmungen einer Sattelfläche bilden. Vorzugsweise stehen diese beiden Hauptkrümmungen senkrecht aufeinander.

Unter dem Ausdruck "zweifach gekrümmtes Schalentragwerk" versteht man gemäß der vorliegenden Erfindung ein Flächentragwerk, entstehend durch Führung einer Kurve (Erzeugende; 1. Hauptkrümmung) auf einer anderen Kurve (Leitkurve; 2. Hauptkrümmung), wobei die Erzeugenden zueinander parallel bleiben (vgl. die Figuren 7a und 7b). Die (flächige, periodisch im Raster wiederkehrende) Kombination dieser Geometrien erfolgt derart, daß einer Leitkurve (Krümmung mit positivem Vorzeichen) eine zweite Krümmung mit negativem. Vorzeichen folgt, so daß eine periodisch wiederkehrende wellenartige Form der Leitkurve in dieser Richtung resultiert, die in der Seitenansicht einer derartigen dreidimensionalen Mittellage sichtbar wird. Der Ausdruck "Schalentragwerk" ist auf dem Fachgebiet allgemein bekannt und bezeichnet in der Regel ein zweifach gekrümmtes Flächentragwerk (Schale).

Die Form der kuppelartigen Erhebungen bzw. der wannenartigen Vertiefungen unterliegt keiner besonderen Beschränkung. Beispielsweise können die kuppelartigen Erhebungen und/oder die wannenartigen Vertiefungen eine elliptische, rechteckige (Faltwerk), pyramidenartige oder rundliche Form aufweisen, wobei eine im wesentlichen halbkugelartige Form besonders bevorzugt ist. Die kuppelartigen Erhebungen und/oder die wannenartigen Vertiefungen der Mittellage, die beispielsweise eine elliptische, rechteckige, pyramidenartige oder rundliche Form aufweisen, können an dem Kontaktpunkt bzw. der Kontaktfläche zu der bzw. den Deckschichten abgeflacht sein, um eine größere Kontaktfläche mit der bzw. den Deckschicht(en) zu ermöglichen. Der Abstand und/oder die Abmessungen der kuppelartigen Erhebungen bzw. der wannenartigen Vertiefungen sind grundsätzlich nicht besonders beschränkt, solange die gewünschten. Form- und Festigkeitseigenschaften nicht nachteilig beeinflußt werden. Es ist jedoch besonders bevorzugt, daß die kuppelartigen Erhebungen und die wannenartigen Vertiefungen einen gleichmäßigen Abstand zueinander aufweisen.

Es wird ausdrücklich darauf hingewiesen, daß es sich hierbei um die rechnergestützte Kombination von aus statischer Sicht idealer Geometrieformen handelt. Die Geometrie der Mittellage ist derart vorteilhaft, daß aufgrund von Schalentragwirkung auftretende Belastungen im Kern nahezu ideal durch Membrankräfte abgetragen werden können. Der Vorteil gegenüber z.B. der Wabenkonstruktion liegt in der wesentlich größeren Klebefläche zwischen der Mittellage und den Deckschichten, wodurch ein Sandwichelement bereitgestellt wird, daß sehr gute Druck- und Querzugfestigkeiten aufweist.

Zur Verdeutlichung der besonderen Struktur der Mittellage wird auch auf die Figuren (insbesondere auf die Figuren 5, 6 und 8 bis 13) verwiesen, die bevorzugte Ausführungsformen der erfindungsgemäßen Sandwichelemente zeigen.

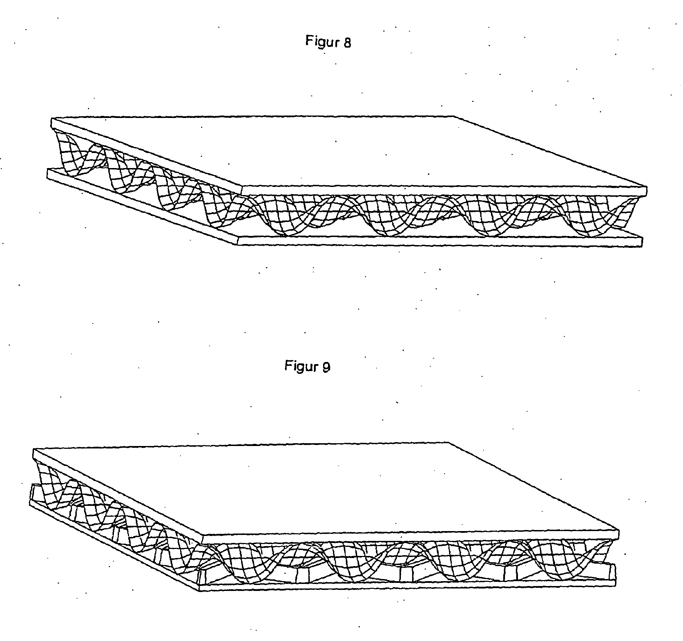

Eine bevorzugte Ausführungsform der vorliegenden Erfindung, die eine Mittellage in Form eines periodisch wiederkehrenden zweifach gekrümmten Schalentragwerks mit gegensinnigen Hauptkrümmungen umfaßt, ist beispielsweise in Figur 8 gezeigt.

Vorzugsweise sind die Deckschichten (insbesondere wenn eine Mittellage aus einem Blech, wie einem Aluminiumblech, verwendet wird) aus einem anderen Material als die Mittellage aufgebaut.

Als Deckschichten kommen grundsätzlich sehr viele Werkstoffe in Frage, so lange die Form- und Festigkeitseigenschaften erfüllt werden, beispielsweise ein Material auf Holzbasis bzw. Cellulosebasis, ein Material auf Kunststoffbasis, ein anorganischer bzw. mineralischer Werkstoff, ein keramisches Material, ein glasartiges Material, etc.. Bevorzugte Materialien für die Deckschichten sind Plattenwerkstoffe, die vorzugsweise Cellulosefasern enthalten, wie Holz, Holzwerkstoff, Holzfaser-Werkstoff, Papier oder Pappe, und/oder anorganische oder mineralische Materialien, beispielsweise in Form von Fasern, enthalten. Demgemäß sind die Deckschichten vorzugsweise nicht aus einem metallischen Material aufgebaut. Beispiele bevorzugter Plattenwerkstoffe sind HDF (Poröse Holzfaserplatte), HFH (Harte Holzfaserplatte), HFM (Mittelharte Holzfaserplatte), MDF (Mitteldichte Holzfaserplatte), MBH (Mittelharte Faserplatte mit hoher Dichte), MBL (Mittelharte Faserplatte mit geringer Dichte), SB (Poröse Faserplatte), HB (Harte Faserplatte), allgemein Faserplatten, Holzspanwerkstoffe, allgemein Spanplatten, Dünn-Spanplatten, FSH (Fumierschichtholz), Furniersperrholz, allgemein Sperrholz, Lagenholz, Kompaktplatten, HPL (High Pressure Laminate), CPL (Continuous Pressure Laminate), GBK (Gipskartonbauplatte), HWL (Holzwolleleichtbauplatten), OSB (Orientet Strand Board), Vermikulitplatten, Calciumsilikatplatten, akustisch wirksame Strukturen, wie z.B. mikro-perforierte HFH-Platten, Schalungsplatten, Siebdruckplatten, Festholz und/oder Faserzement, sowie Pappe, Papier, Folien, plattenförmige Kunststoffe, faserverstärkte Kunststoffe (CFK, GFK) sowie andere auf dem Fachgebiet bekannte und geeignete Plattenwerkstoffe bzw. Materialien, die sich zu Plattenwerkstoffen verarbeiten lassen. Zur Einteilung der Plattenwerkstoffe wird insbesondere auf "Friederich Tabellenbuch Holztechnik", Bildungsverlag EINS, Troisdorf, Ausgabe 2003/2004, Seiten 4-48 bis 4-53, verwiesen. Es können auch Deckschichten mit - über den Querschnitt des Sandwichelements betrachtet - unterschiedlichem Rohdichteprofil verwendet werden, die beispielsweise aus losem Streugut zu Platten verpreßt werden können.

Die Materialstärke bzw. Dicke der Deckschichten ist nicht besonders beschränkt. Vorzugsweise sind die Deckschichten jedoch dünn auszuführen. Besonders bevorzugt sind Materialstärken bzw. Dicken der Deckschichten von unter 25 % der Gesamtstärke bzw. -dicke der Sandwichkonstruktion.

Die Deckschichten des erfindungsgemäßen Sandwichelements lassen sich durch übliche auf dem Fachgebiet bekannte Nachbehandlungsverfahren, wie z.B. Imprägnieren, Hydrophobieren, Lackieren, Furnieren, Bedrucken, Verformen, Verleimen, Beschichten, sowie durch mechanisches Bearbeiten zu einer Vielzahl individuell weiterzuverarbeitender Produkte mit unterschiedlichen Oberflächeneigenschaften veredeln.

Die Mittellage wird vorzugsweise aus einem leichten Material hergestellt, das geeignet ist, die nötigen Anforderungen an Form und Festigkeit zu erfüllen, wobei grundsätzlich sehr viele Werkstoffe in Frage kommen. Die Mittellage weist vorzugsweise die Form einer durchgehenden Fläche auf; sie kann jedoch, wenn gewünscht, auch bereichsweise unterbrochen oder perforiert sein.

Die Mittellage wird vorzugsweise sehr dünn (in Übereinstimmung mit der Schalentheorie; Membran) vorgesehen. Die Abmessungen der Materialstärke unterliegen jedoch keiner besonderen Beschränkung.

Die Mittellage kann beispielsweise aus einem Blech oder einem perforierten Blech, vorzugsweise aus Aluminium oder einer Aluminium-Legierung, Stahl, Messing oder anderen Legierungen mit geeigneten Verformbarkeitseigenschaften, einem Kunststoff, beispielsweise Polyethylen, Polypropylen, Polystyrol, Polyacrylat, Polytetrafluorethylen, Polyurethan, einem faserverstärktem Kunststoff, wie GFK oder CFK, etc., einem Material auf Holzbasis oder Cellulosebasis, einem mineralischen, keramischen oder anorganischen Werkstoff, einem Gewebe oder einem Gewebe mit einer Netz- oder Gitterstruktur aufgebaut sein. Die Mittellage kann auch aus losen Bestandteilen bzw. Komponenten, wie Papierstreifen, Pappmache, Calciumsilikat, Zement, Faserzement, Holzfasern, Cellulosefasern, allgemein Kunststofffasern, Holzspänen, Holzstaub, Polystyrol-, PUR- und vergleichbaren Hartschäumen sowie Substanzen die sich durch Energiezuführung oder durch chemische Reaktionen aufschäumen lassen, Glas- und Keramikwerkstoffen, etc., durch auf dem Fachgebiet bekannte Herstellungsverfahren mit oder ohne geeignete Bindemittel zu einem festen Verbund in Form der dreidimensionalen Mittellage gemäß der vorliegenden Erfindung verarbeitet werden. Besonders bevorzugt sind Ausgangsstoffe, wie z.B. beleimte Holzspäne und Holzfasern, die zu den vorstehend genannten Plattenwerkstoffen verpreßt werden können (hierzu wird auf die auf dem Fachgebiet bekannten Herstellverfahren zur Herstellung von Span-, Faser- und OSB-Platten der Holzindustrie verwiesen), sowie Holzwerkstoffe mit thermoplastischen Kunststoffen als Bindemittel, Holzwerkstoffe mit thermoplastischem Bindemittel und Holzwerkstoffe aus thermoplastischen Fasern.

Vorzugsweise ist die Mittellage aus einer mit Harz, Klebstoff, Kunststoff, Zement, Gips, Wasserglas oder anderen geeigneten Materialien und Bindemitteln verstärkten (und gehärteten) Gewebe- oder Netzstruktur aufgebaut. Eine bevorzugte Gewebe- oder Netzstruktur ist z.B. ein Glasfaser-, Kohlefaser-, Keramikfaser- oder Cellulosefasergewebe. Besonders bevorzugt ist die Mittellage aus einem gehärteten, mit Kunstharz getränkten Glasfaser-, Kohlefaser-, Keramikfaser- oder Cellulosefasergewebe aufgebaut.

Weiterhin ist es bevorzugt, die Mittellage aus losen Bestandteilen bzw. Komponenten aufzubauen, die nach auf dem Fachgebiet bekannten Herstellungs- bzw. Fertigungsungsverfahren, wie z.B. Pressen, Extrudieren, Spritzgießen, etc., zu einem festen Verbund verarbeitet werden können. Bevorzugte Materialien sind Holzwerkstoffe, Kunststoffcompounds, GFK, CFK, Papier, etc.. Besonders bevorzugt ist die Mittellage aus losen Bestandteilen aufgebaut, die nach auf dem Fachgebiet bekannten Herstellungsverfahren zu einem festen Verbund verarbeitet werden können.

Vorzugsweise wird die Mittellage ausgehend von geeigneten planen Werkstoffen hergestellt, die in einem Umformverfahren, wie z.B. Tiefziehen, Pressen, Walzen, etc., zu der erfindungsgemäßen dreidimensionalen Mittellage geformt werden. Besonders bevorzugt ist die dreidimensionale Mittellage aus z.B. einem Aluminiumblech oder verformbaren Kunststoff- oder Kunststoff-enthaltenen Platten aufgebaut.

Die Mittellage kann ein oder mehrschichtig aufgebaut sein. Die Ausrichtung der Mittellagen (z.B. bei Verwendung eines Gewebes) unterliegt keiner besonderen Beschränkung. Vorzugsweise sind Mittellagen, die gerichtete Eigenschaften aufweisen, in einem Winkel von etwa 45° bis etwa 90° zueinander versetzt.

Bevorzugte erfindungsgemäße Sandwichelemente können beispielsweise eine Mittellage aus Aluminium und Deckschichten aus HDF oder MDF, einem Faserzement oder einer Mineralplatte aufweisen, wobei Sandwichelemente mit einer Mittellage aus einem Gewebe, beispielsweise einem Glasfasergewebe oder einem Kohlefasergewebe, und Deckschichten aus HDF oder MDF oder Faserzement besonders bevorzugt sind.

Die Materialauswahl für die Deckschichten und die Mittellage des erfindungsgemäßen Sandwichelements ist grundsätzlich nicht besonders beschränkt. Durch verschiedene Materialkombinationen können die unterschiedlichsten Eigenschaften des erfindungsgemäßen Sandwichelements erreicht werden, betreffend z.B. das Brandverhalten (Kombination von nicht brennbaren Werkstoffen), die akustischen Eigenschaften (akustisch wirksame Deckschichten) sowie die mechanischen Eigenschaften.

Die kuppelartigen Erhebungen und/oder die wannenartigen Vertiefungen der Mittellage können mit einem geeigneten Material, beispielsweise einem Kunstharz, zumindest teilweise gefüllt sein, um der Mittellage eine höhere Steifigkeit im Bereich der Verbindungspunkte bzw. Verbindungsfläche mit der/den Deckschicht(en) zu verleihen. Auch die Zwischenräume zwischen Deckschicht und Mittellage können einseitig oder beidseitig vollständig mit einem geeigneten Material gefüllt werden, beispielsweise mit einem geschäumten Material, um z.B. eine Isolationswirkung zu erreichen.

Die Verbindung zwischen Deckschichten und Mittellage kann durch jede auf dem Fachgebiet bekannte Verbindungsmethode bewerkstelligt werden, wobei es bevorzugt ist, die Deckschichten mit der/den Mittellage(n) punktweise oder flächig zu verbinden. Ferner ist es bevorzugt, die Deckschichten mit der/den Mittellage(n) durch eine flächige Verklebung zu verbinden. Eine derartige flächige Klebeverbindung weist vorzugsweise eine meniskusartige Form an dem Kontaktbereich zwischen Deckschicht und Mittellage auf, die sowohl die Deckschichten als auch einen größeren Bereich der Erhebungen bzw. Vertiefungen der Mittellage kontaktiert, und ermöglicht somit eine größere Kontaktfläche zwischen den Erhebungen bzw. Vertiefungen der Mittellage und der/den Deckschicht(en). Eine derartige flächige Klebeverbindung läßt sich beispielsweise durch Verwendung eines expandierenden bzw. aufblähenden Klebstoffs erzielen.

Es ist bevorzugt, die Deckschichten mit der/den Mittellage(n) durch Kleben, Schweißen, Löten, Nieten und/oder Schrauben zu verbinden. Besonders bevorzugt werden die Deckschichten mit der/den Mittellage(n) durch Verkleben mit Dispersionsklebstoffen, Schmelzklebstoffen, reaktiven Schmelzklebstoffen, expandierenden Klebstoffen, Lösungsmittelklebstoffen, Kontaktklebstoffen sowie Reaktionsklebstoffen (1K- und 2K Systeme), Silicon oder gummiartigen flexiblen Klebstoffen verbunden. Weiterhin können Additive, Zuschlagsstoffe, Füllstoffe sowie Haftvermittler und Primer verwendet werden. Die verwendbaren Klebstoffe unterliegen keinen besonderen Beschränkungen. Abhängig von den verwendeten Materialien für Mittellage und Deckschicht ist ein Fachmann in der Lage, eine geeignete Auswahl der vorteilhaften Klebstoffe zu treffen. Besonders bevorzugte Klebstoffe sind z.B. PUR-Hotmelts, PUR-Klebstoffe allgemein, PVAC-Leime, Harze, Wasserglas, Schmelzklebstoffe, etc..

Aufgrund der besonderen Struktur der Mittellage in Kombination mit den Deckschichten ist das erfindungsgemäße Sandwichelement besonders leicht, formstabil und sehr verwindungssteif. Darüber hinaus zeichnet es sich durch eine ausgezeichnete Tragfähigkeit nach der Schalentheorie aus. Insbesondere werden aufgrund der speziellen Struktur des erfindungsgemäßen Sandwichelements Kräfte, die senkrecht zur Ebene der Deckschichten auftreten, an jedem beliebigen Schnitt in der Plattenebene durch die erfindungsgemäße, spezifisch gestaltete Mittellage abgetragen. Dies läßt sich dadurch erklären, daß die Mittellage gemäß der vorliegenden Erfindung eine besondere Struktur aufweist, bei der Schub-Biegebeanspruchungen durch die Form der Mittellage mit ihren besonderen Erhebungen und Vertiefungen durch Membrankräfte abgetragen werden. Demgemäß ist das erfindungsgemäße Sandwichelement ausgezeichnet als beispielsweise Leichtbauplatte bzw. Leichtbauwerkstoff verwendbar.

Gemäß einer bevorzugten Ausführungsform ist das erfindungsgemäße Sandwichelement verwindungssteif und im wesentlichen nicht plastisch verformbar. Unter dem Ausdruck "im wesentlichen nicht plastisch verformbar" ist zu verstehen, daß keine plastische Verformung möglich ist, wie sie beispielsweise bei ausschließlich aus Metallen aufgebauten Strukturen möglich wäre. Demgemäß ist das erfindungsgemäße Sandwichelement vorzugsweise nicht ausschließlich aus metallischen Schichten aufgebaut.

Die vorteilhafte Kombination von Mittellage und Deckschichten ergeben ein statisch extrem steifes und tragfähiges Verbundelement bei sehr geringem Materialeinsatz.

Die Deckschichten des erfindungsgemäßen Sandwichelements können mehrschichtig aufgebaut sein, z.B. formverleirnte (gebogene) Deckschichten oder plane Schichten in Kombination mit einer dekorativen Schicht oder in Kombination mit einem Stoff, Gewebe, etc.. Gemäß einer besonderen Ausführungsform der vorliegenden Erfindung ist es auch denkbar, daß beispielsweise eine Wand oder eine andere nicht bewegbare Fläche eine Deckschicht in dem erfindungsgemäßen Sandwichelement darstellen kann.

Eine Deckschicht oder mehrere Deckschichten des erfindungsgemäßen Sandwichelements kann/können strukturiert und/oder perforiert sein.

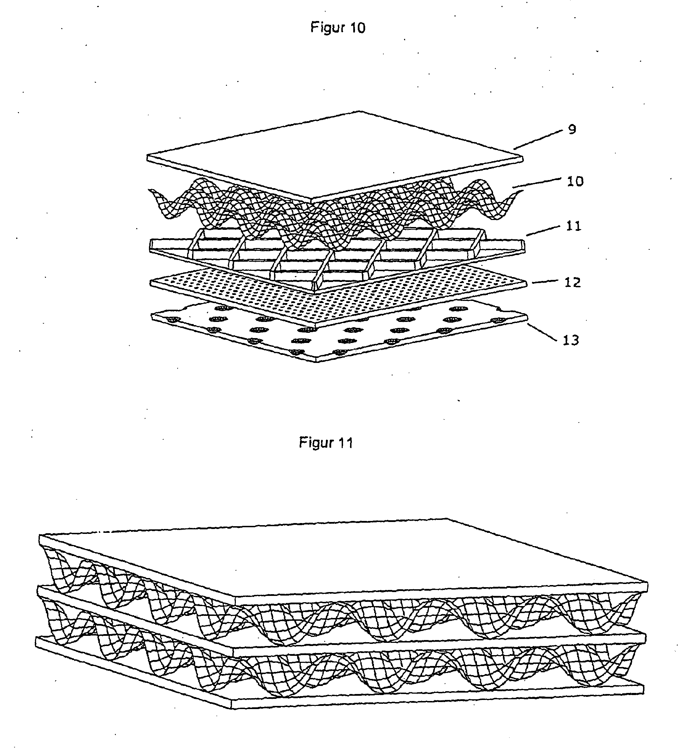

Unter einer strukturierten Deckschicht versteht man eine Deckschicht, die eine vorbestimmte dreidimensionale Struktur, beispielsweise eine plane Schicht mit Erhebungen, Stegen und/oder Vertiefungen, vorzugsweise wannenartigen Vertiefungen, aufweist. Diese strukturierte Deckschicht kann bereichsweise Aussparungen oder Vertiefungen in der Deckschicht aufweisen. Die Anordnung von besonders bevorzugten strukturierten Deckschichten ist beispielsweise in den Figuren 9 und 10 gezeigt. Bei einer Form der strukturierten Deckschicht kann es sich beispielsweise um eine gitterartige Struktur aus Stegen bzw. Stäben (vgl. die strukturierte Deckschicht (11) in Figur 10) handeln, die vorzugsweise auf einer planaren Deckschicht aufgebracht ist. Die aus einer Vielzahl von parallel zueinander angeordneten Stegen aufgebaute Gitterstruktur weist vorzugsweise einen Winkel der sich kreuzenden Stege in einem Bereich von etwa 45° bis etwa 135° auf, wobei der Winkel der sich kreuzenden parallel zueinander angeordneten Stegen vorzugsweise etwa 90° beträgt. Die Stege können auch ringförmig oder in anderen Geometrien aufgebracht sein. Die Ausführung und die Abmessungen der Stege unterliegen grundsätzlich keiner besonderen Beschränkung. Die Stege können derart ausgeführt werden, daß sie aufgrund ihrer Abmessungen im Schichtverbund auf dem Kern bzw. der Mittellage aufliegen und mit diesem verklebt werden können. Diese Art der strukturierten Deckschicht kann auch selbsttragend, d.h. ohne eine tragende weitere (Deck)schicht aufgebaut sein.

Ferner kann die strukturierte Deckschicht eine perforierte Deckschicht (vgl. die strukturierte Deckschicht (12) in Figur 10) oder eine Deckschicht mit wannenartigen Vertiefungen, die vorzugsweise eine im wesentlichen halbkugelartige Form aufweisen (vgl. die strukturierte Deckschicht (13) in Figur 10), sein. Die in Figur 10 gezeigten Deckschichten (11), (12) oder (13) können auch auf beiden Seiten der Mittellage (10) vorgesehen werden und die Mittellage (10) einschließen, wobei jede Kombination der Deckschichten (9), (11), (12) oder (13), um ein erfindungsgemäßes Sandwichelement zu bilden, möglich ist.

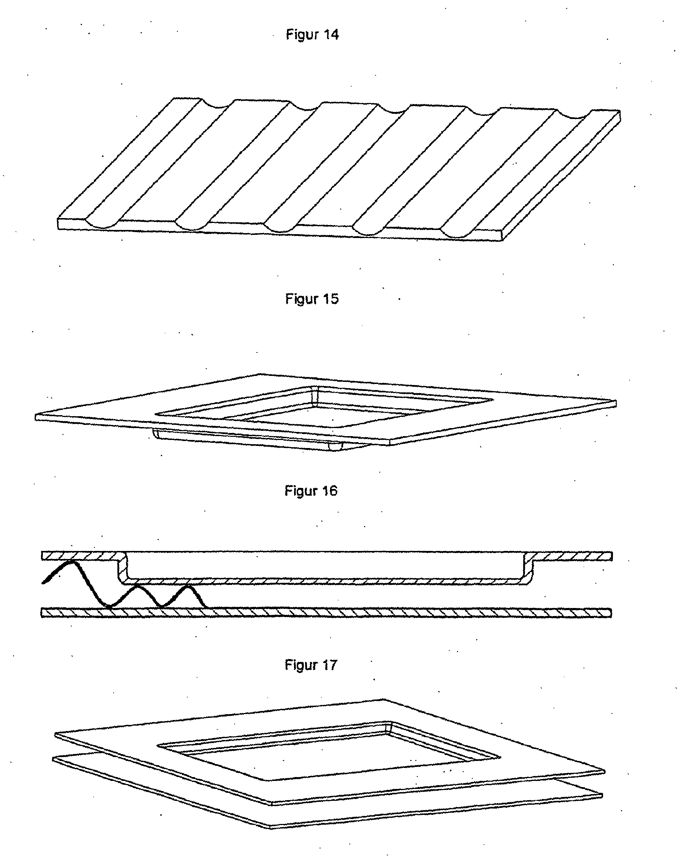

Eine (strukturierte) Deckschicht mit wannenartigen Vertiefungen kann beispielsweise durch eine runde oder eine zylindrische Bohrung auf einer Seite bzw. der Innenseite der Deckschicht hergestellt werden, wobei der zurückbleibende Hohlraum der runden bzw. rundlichen oder zylindrischen Bohrung die Erhebungen und Vertiefungen der Mittellage vorzugsweise formschlüssig aufnimmt. Die wannenartigen Vertiefungen bzw. zylindrischen Bohrungen können bis nahe an die außenliegende Oberfläche der Deckschicht(en) ausgeführt werden und diese teilweise bzw. vollständig durchbrechen. Dies ist besonders bevorzugt wenn eine weitere, z.B. eine dekorative Deckschicht aufgebracht wird. Ferner ist es möglich, eine rillenförmige Bohrung in einer Seite der Deckschicht vorzusehen, um die Erhebungen und Vertiefungen der Mittellage aufzunehmen (vgl. Figur 14).

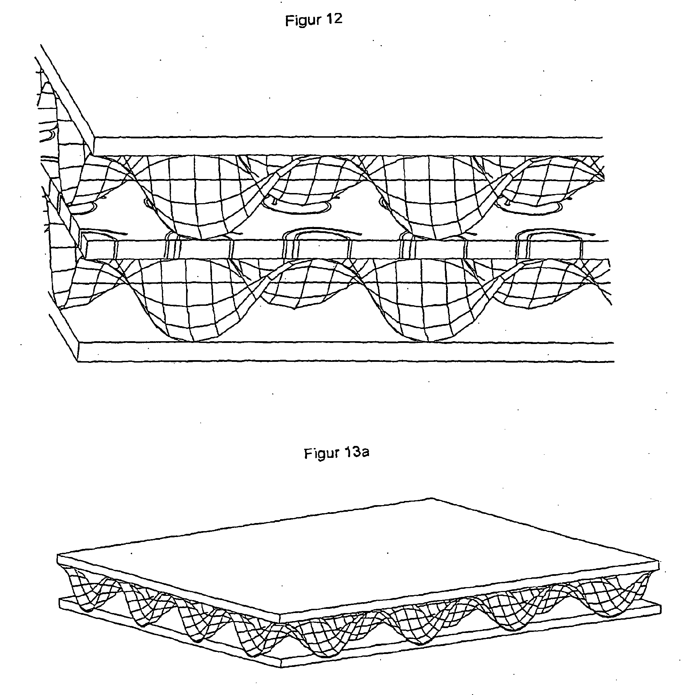

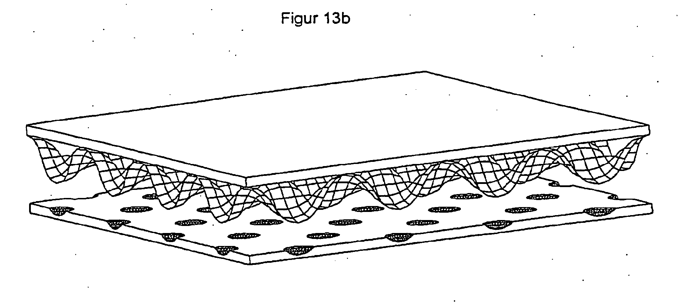

Eine strukturierte Deckschicht mit wannenartigen Vertiefungen, die vorzugsweise eine im wesentlichen halbkugelartige Form aufweisen (vgl. die strukturierte Deckschicht (13) in Figur 10) und daher der Form der kuppelartigen Erhebungen bzw. wannenartigen Vertiefungen der erfindungsgemäßen Mittellage (vgl. die Mittellage (10) in Figur 10) sehr gut entsprechen, weist den Vorteil auf, daß eine verbesserte Klebefläche zwischen Deckschicht und Mittellage verglichen mit einer planen Deckschicht ohne Vertiefungen resultiert. Dadurch läßt sich eine nochmals verbesserte Steifigkeit und Tragfähigkeit einer derartigen Konstruktion erreichen. Die wannenartigen Vertiefungen in einer oder mehreren Deckschicht(en) (vgl. beispielsweise die Figuren 13a und 13b) befinden sich an der der Mittellage zugewandten Seite der Deckschichten und sind derart ausgestaltet, daß sie sich an die Form der Mittellage (d.h. die Erhebungen und Vertiefungen der Mittellage) anpassen (vgl. die Figuren 10, 13a und 13b). Die kuppelartigen Erhebungen bzw. wannenartigen Vertiefungen der Mittellage können demgemäß paßgenau bzw. formgenau bzw. formschlüssig in die wannenartigen Vertiefungen der Deckschicht(en) eingreifen und ermöglichen somit eine noch weiter verbesserte Stabilität des erfindungsgemäßen Sandwichelements. Vorzugsweise weisen die kuppelartigen Erhebungen und die wannenartigen Vertiefungen der Mittellage einen gleichmäßigen Abstand zueinander auf, und sind deckungsgleich zu den wannenartigen Vertiefungen der Deckschicht(en) angeordnet. Bei Anwendung von wannenartigen Vertiefungen in der/den Deckschicht(en) läßt sich eine wesentliche Verbesserung der Querzugsfestigkeit und der Biegefestigkeit des erfindungsgemäßen Sandwichelements erreichen. Durch die wesentlich vergrößerte Verbindungsfläche bzw. Klebefläche lassen sich Schubkräfte zwischen den Deckschichten und der

Mittellage durch anteiligen Form- und Kraftschluß zusätzlich zum Stoffschluß (vorzugsweise durch Verklebung) sehr gut übertragen. Dadurch läßt sich ein statisch optimales Sandwichelement herstellen, bei dem die Zug- und Druckkräfte nur im äußersten Randbereich abgetragen werden.

Wie aus Figur 10 ersichtlich ist, passen die wannenartigen Vertiefungen der Mittellage sehr gut in die Aussparungen der vorstehend beschriebenen strukturierten Deckschichten. Gleiches gilt selbstverständlich auch für die kuppelartigen Erhebungen der Mittellage, wenn beide Deckschichten bei einem dreischichtigen Aufbau Aussparungen, vorzugsweise wannenartige Vertiefungen; aufweisen. Dadurch läßt sich am Beispiel der Deckschicht mit aufgebrachten Stegen eine ausgezeichnete Steifigkeit selbst im Bereich der Ecken eines beispielsweise rechtekkig zugeschnittenen erfindungsgemäßen Sandwichelements erreichen. Die stegförmige Strukturierung der Deckschichten verbessert ebenfalls die Tragfähigkeit der Konstruktion, da die Deckschichten vorteilhaft gegen Knittern und Beulen stabilisiert werden, ohne die Abmessungen der Konstruktion zu verändern.

Unter einer perforierten Deckschicht versteht man eine Deckschicht mit bereichsweisen durchgehenden Aussparungen bzw. Löchern. Diese Aussparungen können regelmäßig oder unregelmäßig über die Deckschicht angeordnet sein. Besonders bevorzugt ist es, kreisrunde Aussparungen in regelmäßigen Abständen zueinander vorzusehen (vgl. Figur 10).

Die Form der Deckschichten unterliegt grundsätzlich keiner besonderen Beschränkung. Es ist jedoch bevorzugt, daß die Deckschichten eine plane bzw. planare bzw. ebene oder gebogene Form aufweisen. Bei Anwendung von planen Deckschichten läßt sich das daraus resultierende erfindungsgemäße Sandwichelement besonders vorteilhaft als Auskleidungsmaterial für größere Flächen, beispielsweise für den Schiffsinnenausbau oder den Flugzeuginnenausbau, als tragender Werkstoff oder für architektonische Zwecke, beispielsweise im Fertighausbau, einsetzen. Bei Anwendung von Deckschichten mit gebogener Form sind sogar Auskleidungen von gebogenen bzw. zylindrischen Flächen, wie gebogene Thekenanlagen, in sämtlichen Materialkombinationen möglich, was bislang nicht realisierbar war. Eine Ausführungsform des erfindungsgemäßen Sandwichelements umfaßt Deckschichten, die durchgehende Rinnen an der zu der Mittellage weisenden Seite aufweisen (vgl. Figur 14). In diesen Rinnen werden die Erhebungen und Vertiefungen der Mittellage aufgenommen, was auch ein gebogenes Sandwichelement mit gebogenen Deckschichten ermöglicht.

Gemäß einer bevorzugten Ausführungsform umfaßt das erfindungsgemäße Sandwichelement mindestens zwei planare Deckschichten aus einem Plattenwerkstoff, vorzugsweise aus einem Material auf Holzbasis bzw. Cellulosebasis, einem mineralischen Material, einem keramischen Material und/oder einem glasartigen Material, und mindestens eine zwischen den Deckschichten angeordnete Mittellage in Form eines periodisch wiederkehrenden zweifach gekrümmten Schalentragwerks mit gegensinnigen Hauptkrümmungen.

Zwischen einer Deckschicht oder zwischen mehreren Deckschichten und der Mittellage kann eine mindestens bereichsweise angeordnete Zwischenlage vorgesehen sein. Vorzugsweise ist die Zwischenlage nur an den Stellen vorhanden, an welchen die Deckschicht mit der Mittellage in Kontakt kommt. Die Art der Zwischenlage unterliegt keinen besonderen Beschränkungen, es ist jedoch bevorzugt, eine Zwischenlage mit akustisch dämpfender Wirkung, beispielsweise aus einem elastischen Material oder Absorbermaterial, wie Kautschuk oder Gummi, Kork oder einem Kunststoff, etc., zu verwenden. Vorzugsweise wird als Zwischenlage ein kautschukartiges Material verwendet.

Besonders bevorzugt befindet sich diese Zwischenlage nur im Bereich der Kontaktpunkte bzw. Kontaktfläche zwischen der/den Deckschicht(en) und der Mittellage. Die Zwischenlage kann zwischen den kuppelartigen Erhebungen oder den wannenartigen Vertiefungen der Mittellage und nur einer Deckschicht angeordnet sein. Es ist jedoch auch möglich, daß die Zwischenlage auf beiden Seiten der Mittellage angeordnet wird. Besonders bevorzugt weist die Zwischenlage, die zwischen den kuppelartigen Erhebungen bzw. wannenartigen Vertiefungen der Mittellage und der Deckschicht angeordnet werden können, die Form einer Scheibe bzw. eine zylindrische Form auf, die sich sowohl beispielsweise der kuppelartigen Form der Erhebungen, als auch der Form der Innenseite der Deckschicht anpassen kann.

Die Gesamtdicke eines erfindungsgemäßen Sandwichelements unterliegt keinen besonderen Beschränkungen und kann abhängig von der gewünschten Verwendung in einer geeigneten Dicke, beispielsweise bis etwa 100 cm, eingestellt werden. Vorzugsweise liegt die Gesamtdicke des erfindungsgemäßen Sandwichelements in einem Bereich von etwa 5 mm bis etwa 50 mm, wobei eine Dicke in einem Bereich von etwa 15 mm bis 25 mm besonders bevorzugt ist, wenn das erfindungsgemäße Sandwichelement beispielsweise als Plattenwerkstoff für Auskleidungen, etc., verwendet werden soll. Wenn das erfindungsgemäße Sandwichelement beispielsweise als tragender Werkstoff (z.B. als tragende Wand) für den Fertighausbau, etc., verwendet werden soll, liegt die Gesamtdicke des erfindungsgemäßen Sandwichelements vorzugsweise in einem Bereich von etwa 50 mm bis etwa 500 mm, wobei eine Dicke in einem Bereich von etwa 100 mm bis 350 mm besonders bevorzugt ist.

Die mit dem erfindungsgemäßen Sandwichelement erzielbare Gesamtrohdichte ist bei geeigneter Materialauswahl der Deckschichten und der Mittellage unter Auswahl einer geeigneten Verbindungsart, wie Kleben, extrem niedrig und kann deutlich unter 1000 kg/m³ liegen, wobei eine Gesamtrohdichte unter 500 kg/m³ bevorzugt ist und eine Gesamtrohdichte unter 400 kg/m³ besonders bevorzugt ist. Sogar eine Gesamtrohdichte von unter 300 kg/m³ ist durch die spezifische Gestaltung gemäß der vorliegenden Erfindung erreichbar. Eine Gesamtrohdichte von unter 300 kg/m³ ist bislang auf dem Gebiet von z.B. nicht brennbaren Plattenwerkstoffen noch nicht realisiert worden und unterbietet entsprechende Werte der derzeit auf dem Markt angebotenen, nicht brennbaren Plattenwerkstoffe um bis zu 100%.

Die Überlegenheit des erfindungsgemäßen Sandwichelement im Vergleich zu bislang bekannten Sandwichkonstruktionen wird insbesondere durch das nachfolgende beispielhafte Sandwichelement verdeutlicht.

Ein erfindungsgemäßes Sandwichelement (in einer nicht brennbaren Ausführungsform), das beispielsweise aus zwei hochverdichteten, mineralischen Deckschichten (1000 kg/m³) mit einer Dicke von 2,5 mm und einer Mittellage aus einem Aluminiumblech (2702 kg/m³) mit einer Dicke von etwa 0,37 mm unter Verwendung eines Klebstoffs zu einem Sandwichelement verpresst wird, ergibt bei einer Gesamtdicke von 20 mm eine Gesamtrohdichte von nur 275 kg/m³, d.h. deutlich unter dem Wert von 300 kg/m³, und weist trotz des extrem niedrigen Gewichts eine ausgezeichnete Steifigkeit und Tragfähigkeit auf.

Die Leistungsfähigkeit des erfindungsgemäßen Sandwichelements läßt sich sogar noch weiter steigern, wenn eine der in Figur 10 gezeigten strukturierten Deckschichten (11), (12) oder (13) in Kombination mit einer Mittellage (10) und einer Deckschicht (9) verwendet wird. Dadurch läßt sich Gewicht einsparen, da das Volumen der Deckschichten durch die Strukturierung reduziert werden kann. Die Steifigkeit und Tragfähigkeit wird aufgrund der spezifischen Strukturierung erhöht. Ferner kann die Festigkeit im Bereich der Ecken eines solchen erfindungsgemäßen Sandwichelements, insbesondere bei Verwendung der strukturierten Deckschicht (11) (vgl. Figur 10), deutlich verbessert werden. Die in Figur 10 gezeigten Deckschichten (11), (12) oder (13) können auch auf beiden Seiten der Mittellage (10) vorgesehen werden und die Mittellage (10) einschließen. Es ist eine beliebige Kombination aus zwei oder mehreren Deckschichten (9), (11), (12) oder (13) in Kombination mit der Mittellage (10) möglich, um ein erfindungsgemäßes Sandwichelement zu bilden.

Das erfindungsgemäße Sandwichelement ist nicht auf eine Struktur aus zwei Deckschichten mit einer dazwischenliegenden Mittellage beschränkt. Sandwichelemente mit drei oder mehreren Deckschichten, die jeweils zwischen den Deckschichten angeordnete Mittellagen aufweisen, sind ausdrücklich von dieser Erfindung mitumfaßt.

Eine weitere bevorzugte Ausführungsform der vorliegenden Erfindung, die ein Sandwichelement mit zwei Mittellagen in Form eines zweifach gekrümmten Schalentragwerks mit gegensinnigen Hauptkrümmungen und drei Deckschichten umfaßt, ist in Figur 11 gezeigt. Durch diesen Aufbau läßt sich ein noch verwindungssteiferes Sandwichelement herstellen, sowie große Plattenstärken realisieren. Auch gemäß dieser Ausführungsform können alle hier beschriebenen strukturierten und/oder perforierten Deckschichten in jeder geeigneten Kombination vorgesehen werden, um ein erfindungsgemäßes Sandwichelement zu bilden. Bei einem derartigen Fünfschichtaufbau können sich die Erhebungen der Mittellage auch direkt gegenüber stehen bzw. kontaktieren. Da in einem derartigen Sandwichelement bei Biegung in der Mitte des Sandwichelements quasi keine Kräfte auftreten spricht man von der sogenannten Nulllinie. Die mittlere Deckschicht kann demnach weggelassen werden. Um in diesem Vierschichtaufbau (ohne mittlere Deckschicht) einen verbesserten Kontakt der beiden angrenzenden Mittellagen sicherzustellen können beispielsweise meniskusartige Mittel vorgesehen werden, die auf zumindest einige, vorzugsweise aber alle Erhebungen aufgeklebt werden.

Eine weitere bevorzugte Ausführungsform des erfindungsgemäßen Sandwichelements umfaßt, in der folgenden Reihenfolge, eine Deckschicht, eine Mittellage, eine bereichsweise durchbrochene bzw. durchschnittene Deckschicht mit Aussparungen, eine Mittellage und eine Deckschicht, wobei dieser Aufbau, wie vorstehend beschrieben, auch weitere Mittellagen und/oder Deckschichten umfassen kann.

Unter einer bereichsweise durchschnittenen bzw. durchbrochenen Deckschicht versteht man gemäß der vorliegenden Erfindung eine, wie vorstehend beschriebene Deckschicht, die vorzugsweise im Kontaktbereich mit den Erhebungen und/oder Vertiefungen der Mittellage besonders geformte Einschnitte aufweist. Die bereichsweise (im Raster periodisch wiederkehrend) durchschnittene Deckschicht weist z.B. ornamentartige Einschnitte bzw. Formen auf. Die Einschnitte erfolgen im wesentlichen über die gesamte Materialstärke der Deckschicht, so daß durch die besonderen Einschnitte eine Art Federwirkung bzw. Dämpfungswirkung erzielt werden kann. Besonders bevorzugt weisen die Einschnitte der Deckschicht eine, wie in Figur 12 gezeigte, spiralartige Form auf. Dieser spiralartige Einschnitt läßt sich, abhängig von dem verwendeten Material, beispielsweise durch einen Wasserstrahl oder einen Laserstrahl erzeugen. Es ist besonders bevorzugt, daß die beiden in diesem Aufbau verwendeten Mittellagen im wesentlichen deckungsgleich übereinander angeordnet sind, so daß die vorstehend beschriebenen Einschnitte frei schwingen können und somit dämpfend wirken können. Die akustische Wirksamkeit läßt sich weiter erhöhen, wenn für die Mittelagen dämpfende Werkstoffe verwendet werden. Die Form der Einschnitte ist nicht besonders beschränkt, eine spiralförmige Ausführung ist jedoch besonders bevorzugt.

Auf einer äußeren Deckschicht auftreffende Schwingungen, wie beispielsweise Schallwellen, werden durch diesen besonderen Aufbau eines derartigen erfindungsgemäßen Sandwichelements nicht direkt an die gegenüberliegende Fläche der Deckschicht übertragen. Vielmehr entsteht eine Art Federwirkung, bei der auftreffende Schallwellen zu einem gewissen Ausmaß absorbiert und in Wärmeenergie (Schalldämmung) umgewandelt werden. Diese Konstruktion des erfindungsgemäßen Sandwichelements kann beispielsweise als Trennwand eingesetzt werden und hat insbesondere für den Schiffsinnenausbau oder Flugzeuginnenausbau sowie den Trockenbau größte wirtschaftliche Bedeutung. In diesem Zusammenhang sei auf Gipskarton-Konstruktionen verwiesen, bei denen der Schall hauptsächlich durch Schwingungen übertragen wird, so daß ein erheblicher technischer Aufwand betrieben werden muß, um dies zu unterbinden. Ein bevorzugtes Beispiel für einen Aufbau des erfindungsgemäßen Sandwichelements für eine Trennwand ist beispielsweise wie folgt: Gipskarton (9,5 mm) als Deckschichten und HDF (8 mm) als bereichsweise durchschnittene Deckschicht mit Aussparungen, die auf beiden Seiten von einer Mittellage aus gepressten Holzfasern (vergleichbar mit HFH) umgeben ist. Die Leistung solcher schalldämmender Konstruktionen kann noch weiter verbessert werden, indem man akustisch wirksame Deckschichten verwendet, wodurch eine zusätzliche Schalldämpfung erreicht werden kann. Eine bevorzugte Ausführungsform dieser spezifischen Gestaltung des erfindungsgemäßen Sandwichelements ist in Figur 12 gezeigt.

Eine weitere bevorzugte Ausführungsform des erfindungsgemäßen Sandwichelements, das eine Deckschicht mit wannenartigen Vertiefungen umfaßt, die vorzugsweise eine im wesentlichen halbkugelartige Form aufweisen, ist in den Figuren 13a und 13b gezeigt. Es ist auch bevorzugt, daß beide Deckschichten der in den Figuren 13a und 13b gezeigten Sandwichelemente derartige wannenartige Vertiefungen aufweisen. Die beispielsweise in den Figuren 13a und 13b gezeigten wannenartigen Vertiefungen in einer oder in beiden Deckschicht(en) befinden sich an der der Mittellage zugewandten Seite der Deckschicht(en) und sind derart ausgestaltet, daß sie sich an die Form der Mittellage (d.h. den Erhebungen und Vertiefungen der Mittellage) anpassen. Die kuppelartigen Erhebungen bzw. wannenartigen Vertiefungen der Mittellage können demgemäß paßgenau bzw. formgenau bzw. formschlüssig in die wannenartigen Vertiefungen der Deckschicht(en) eingreifen und ermöglichen somit eine noch weiter verbesserte Stabilität des erfindungsgemäßen Sandwichelements. Vorzugsweise weisen die kuppelartigen Erhebungen und die wannenartigen Vertiefungen der Mittellage einen gleichmäßigen Abstand zueinander auf, und sind - was sich besonders gut aus Figur 13b erkennen läßt - deckungsgleich zu den wannenartigen Vertiefungen der Deckschicht(en) angeordnet.

Das erfindungsgemäße Sandwichelement kann auch ein Leichtbauelement mit unterschiedlichem Höhenprofil sein (vgl. die Figuren 15 bis 17), wobei sich die Deckschichten beispielsweise durch Prägepressen herstellen lassen. Ein derartiges Sandwichelement eignet sich beispielsweise als Nachbildung von Möbelfronten in der Bauweise Rahmen mit Holzfüllung, als Türblatt oder als Verkleidung, z.B. Kofferrauminnenverkleidung, Hutablage, etc., bei der mindestens eine Seite ein unterschiedliches Höhenprofil aufweist. Unter einer Deckschicht mit unterschiedlichem Höhenprofil versteht man eine Deckschicht, die bereichsweise Erhöhungen und Vertiefungen aufweisen kann und beispielsweise eine stufenartige Form aufweisen kann (vgl. die Figuren 15 bis 17).

Die Vorteile des erfindungsgemäßen Sandwichelements gegenüber bislang bekannten Elementen werden nachfolgend zusammengefaßt:
Die Mittellage läßt sich in nur einem Arbeitsschritt herstellen und erfordert keine aufwendige Maschinentechnik (ausgenommen sind hier, falls erforderlich, beispielsweise Aushärte- und Trocknungsprozesse).
Für die Mittellage wird nur eine minimale Menge an Material benötigt. Selbst im Vergleich zu den Wabenkonstruktionen läßt sich deutlich Material einsparen, was ein großer Vorteil für den Leichtbau darstellt und eine gute Ökobilanz ergibt.
Die Fertigung kann im Gegensatz zu den meisten anderen Sandwichkonstruktionen kontinuierlich erfolgen und ist damit sehr wirtschaftlich.
Die aus Stabilitätsgründen üblicherweise verwendeten Rahmenhölzer im Randbereich von beispielsweise Papierwabenkonstruktionen sind aufgrund der guten Stabilität des erfindungsgemäßen Sandwichelements im Rand- und Eckbereich überflüssig und können weggelassen werden.
Das Anfahren von Kantenmaterial ist direkt möglich, da der Randbereich eine gute Anlagefläche bietet.
Aufgrund der guten Formstabilität der Mittellage weisen die erfindungsgemäßen Sandwichelemente weniger Verzugserscheinungen auf. Waben- oder Wellkonstruktionen geben z.B. einseitigen klimatischen Beanspruchungen durch Verzug nach, da der Kern diese Belastungen nicht aufnehmen kann. Besonders hervorzuheben ist, daß die Konstruktion einseitig beschichtet werden kann. Die Kernlage kann den Belastungen ohne Verzug standhalten.
Aufgrund der nicht vorhandenen Formstabilität lassen sich Wabenstrukturen nicht oder nicht gut direkt beleimen. Der Klebstoffauftrag erfolgt daher auf den Deckschichten. Da die Waben aber nur eine sehr geringe stegförmige "Klebefläche" aufweisen, wird üblicherweise zu viel Klebstoff aufgetragen. Die Mittellage gemäß der vorliegenden Erfindung läßt sich punktweise beleimen. Damit erfolgt vorteilhafterweise ein minimaler und sehr effektiver Klebstoffauftrag.
Durch die größeren Kontaktflächen zu den Deckschichten ergeben sich sehr gute Querzugfestigkeiten des Gesamtverbundes. Daher ist die Verwendung von gängigen Verbindungsbeschlägen möglich.
Das erfindungsgemäße Sandwichelement weist eine nahezu ideale Lastabtragung in der Mittellage auf.
Das erfindungsgemäße Sandwichelement läßt sich im Gegensatz zu beispielsweise einer Wabenkonstruktion gut durchlüften. Beim Pressvorgang (Heißpressen) einer Wabenkonstruktion bildet sich in der Wabe durch den Temperaturunterschied Druck, so daß die Presszeit so lang gewählt werden muß, bis der Klebstoff vollständig ausgehärtet ist. Andernfalls würde der sich bildende Staudruck (innerhalb einer geschlossenen Wabe) die frische Verklebung beim Öffnen der Presse zerstören. Wässrige Klebstoffsysteme können verwendet werden, da durch die gute Durchlüftung der Mittellage die Feuchtigkeit entweichen kann.
Durch den besonderen Aufbau der Mittellage ergibt sich der Vorteil, daß man einseitig strukturierte (stabilisierende) Deckschichten verwenden kann. Die Strukturierung sollte derart erfolgen, daß sie mit dem Raster der Mittellage übereinstimmt. Wenn auf die Deckschichten Stege aufgebracht werden, wirken diese derart stabilisierend, daß die Dimensionierung der Deckschichten noch weiter verringert werden kann. Dies ist weder bei Waben noch bei Wellkonstruktionen möglich.
Durch den besonderen Aufbau der Mittellage ergibt sich der Vorteil, daß man vorteilhaft einseitig strukturierte Deckschichten verwenden kann, um die Klebefläche zwischen Deckschichten und Mittelschicht zu vergrößern.

Die vorliegende Erfindung ist keinesfalls auf die hier ausführlich diskutierten besonderen Ausführungsformen beschränkt. Eine Kombination der hier beschriebenen Ausführungsformen, insbesondere eine geeignete Kombination von Mittellage und den hier beschriebenen strukturierten oder unstrukturierten Deckschichten, ist auch möglich.

Nachfolgend werden die Figuren der vorliegenden Anmeldung kurz erläutert:
Figur 1a zeigt eine im Stand der Technik bekannte Sandwichkonstruktionen mit homogenem Kemaufbau.
Figur 1b zeigt unterschiedliche, im Stand der Technik bekannte Sandwichkonstruktionen mit strukturiertem Kernaufbau.
Figur 2 zeigt im Stand der Technik bekannte wellblechartige Sandwichkonstruktionen.
Figur 3 zeigt im Stand der Technik bekannte Wabenkonstruktionen.
Figur 4 zeigt im Stand der Technik bekannte Sandwichkonstruktionen mit zylindrischen Erhebungen als Abstandshalter im Kern.
Figur 5 zeigt eine bevorzugte dreidimensionale Mittellage gemäß der vorliegenden Erfindung, die kuppelartige Erhebungen (1) und wannenartige Vertiefungen (2) aufweist, wobei benachbarte kuppelartige Erhebungen (1) jeweils über Sattelflächen (3) miteinander verbunden sind und die wannenartigen Vertiefungen (2) auch über Sattelflächen (3) miteinander verbunden sind. Eine Gerade (4) mit kuppelartigen Erhebungen (1) und wannenartigen Vertiefungen (2) weist gemäß dieser Ausführungsform einen Winkel von 45° zu den Geraden (5) und (6) auf.
Figur 6 zeigt einen Schnitt durch ein bevorzugtes erfindungsgemäßes Sandwichelement, wobei die unterschiedliche Ausprägung der Amplitude der wellenartigen Kontur bei einem Schnitt unter 45° (7) und 90° (8) deutlich sichtbar ist.
Figur 7a ist eine schematische Abbildung, die ein zweifach gekrümmtes Schalentragwerk mit gleichsinnigen Hauptkrümmungen zeigt.
Figur 7b ist eine schematische Abbildung, die ein zweifach gekrümmtes Schalentragwerk mit gegensinnigen Hauptkrümmungen zeigt.
Figur 8 zeigt ein erfindungsgemäßes Sandwichelement mit zwei planaren Deckschichten und einer zwischen den Deckschichten angeordneten Mittellage in Form eines periodisch wiederkehrenden zweifach gekrümmten Schalentragwerks mit gegensinnigen Hauptkrümmungen.
Figur 9 zeigt ein erfindungsgemäßes Sandwichelement mit einer oberen planaren Deckschicht, einer unteren strukturierten Deckschicht mit Stegen und einer zwischen den beiden Deckschichten angeordneten Mittellage in Form eines periodisch wiederkehrenden zweifach gekrümmten Schalentragwerks mit gegensinnigen Hauptkrümmungen.
Figur 10 ist eine explosionsartige Darstellung eines beispielsweise in Figur 9 gezeigten erfindungsgemäßen Sandwichelements, woraus sich die besondere Struktur der hier gezeigten drei alternativen Varianten für die untere strukturierte Deckschicht (vgl. die strukturierten Deckschichten (11), (12) oder (13)) leicht erkennen lassen. Das in Figur 10 gezeigte erfindungsgemäße Sandwichelement umfaßt eine obere plane Deckschicht (9), eine untere strukturierte Deckschicht mit Stegen (11) oder eine untere perforierte, gelochte Deckschicht (12) oder eine untere Deckschicht mit wannenartigen Vertiefungen (13) und eine zwischen den beiden Deckschichten angeordneten Mittellage (10) in Form eines periodisch wiederkehrenden zweifach gekrümmten Schalentragwerks mit gegensinnigen Hauptkrümmungen.
Figur 11 zeigt ein erfindungsgemäßes Sandwichelement mit drei planaren Deckschichten und zwei jeweils zwischen den Deckschichten angeordneten Mittellagen in Form eines periodisch wiederkehrenden zweifach gekrümmten Schalentragwerks mit gegensinnigen Hauptkrümmungen.
Figur 12 zeigt ein erfindungsgemäßes Sandwichelement, das in der folgenden Reihenfolge eine plane Deckschicht, eine Mittellage, eine bereichsweise durchbrochene bzw. durchschnittene Deckschicht mit spiralartigen Aussparungen, eine Mittellage und eine plane Deckschicht umfaßt.
Die Figuren 13a und 13b zeigen ein erfindungsgemäßes Sandwichelement mit zwei planaren Deckschichten und einer zwischen den Deckschichten angeordneten Mittellage in Form eines periodisch wiederkehrenden zweifach gekrümmten Schalentragwerks mit gegensinnigen Hauptkrümmungen, wobei eine oder beide planaren Deckschichten wannenartige Vertiefungen aufweisen, die sich im wesentlichen der Form der Mittellage anpassen. Die (kuppelartigen) Erhebungen bzw. (wannenartigen) Vertiefungen der Mittellage greifen hierbei vorzugsweise formschlüssig bzw. paßgenau in die wannenartigen Vertiefungen der Deckschicht(en) ein: Die Erhebungen bzw. Vertiefungen der Mittellage, welche vorzugsweise formschlüssig bzw. paßgenau in die wannenartigen Vertiefungen der Deckschicht(en) eingreifen, sind vorzugsweise durch eine flächige Verklebung (im Bereich des Kontakts) mit den Deckschichten kraftschlüssig verbunden.
Figur 14 zeigt eine Deckschicht mit rillenförmigen Bohrungen bzw. (durchgehenden) Rinnen in einer Seite der Deckschicht, um die Erhebungen und Vertiefungen der Mittellage aufzunehmen.
Figur 15 zeigt eine Deckschicht mit unterschiedlichem Höhenprofil.
Die Figuren 16 und 17 zeigen ein Sandwichelement mit einer Deckschicht mit unterschiedlichem Höhenprofil und einer planaren Deckschicht. Aus Figur 16 läßt sich besonders gut erkennen, daß sich die Form der Mittellage an die Form der Deckschicht mit unterschiedlichem Höhenprofil anpaßt.

Ferner stellt die vorliegende Erfindung ein Verfahren zur Herstellung eines wie vorstehend definierten Sandwichelements bereit, umfassend die Schritte: Herstellen der Mittellage in Form eines periodisch wiederkehrenden zweifach gekrümmten Schalentragwerks mit gegensinnigen Hauptkrümmungen, und Verbinden der Mittellage mit den Deckschichten.

Der Schritt des Herstellens der Mittellage in Form eines periodisch wiederkehrenden zweifach gekrümmten Schatentragwerks mit gegensinnigen Hauptkrümmungen kann, abhängig von dem für die Mittellage verwendeten Material, durch die auf dem Fachgebiet üblicherweise verwendeten Methoden erreicht werden, wie z.B. Pressen, Walzen, Extrudieren, Spritzgießen oder Tiefziehen. Die Herstellung kann durch Kaltverformen oder Heißverformen bzw. durch z.B. einen Aushärtungsprozess erfolgen. Bei Verwendung eines beispielsweise mit Harz getränkten Gewebes ist es für die Herstellung der Mittellage bevorzugt, ein in einer Pressschablone gespanntes Gewebe auszuhärten, um eine Mittellage in Form eines periodisch wiederkehrenden zweifach gekrümmten Schalentragwerks mit gegensinnigen Hauptkrümmungen zu erzeugen, das kuppelartige Erhebungen und wannenartige Vertiefungen aufweist, wobei benachbarte kuppelartige Erhebungen jeweils über Sattelflächen miteinander verbunden sind und die wannenartigen Vertiefungen auch über Sattelflächen miteinander verbunden sind. Als weitere geeignete Herstellungsverfahren für die Mittellage (und die Deckschichten) seien ferner Gießen, Sintern, Aufschäumen, Expandieren, etc., z.B. Gießen von selbsthärtenden Massen, genannt.

Bei Verwendung eines z.B. planen und ebenen Ausgangsmaterials ist es für die Herstellung der Mittelage bevorzugt, den Werkstoff in einem Walzvorgang mit einer Kalanderpresse oder einer Doppelbandpresse sowie in einer Taktpresse bzw. durch einen Tiefziehvorgang in eine Mittellage in Form eines periodisch wiederkehrenden zweifach gekrümmten Schalentragwerks mit gegensinnigen Hauptkrümmungen zu bilden, das kuppelartige Erhebungen und wannenartige Vertiefungen aufweist, wobei benachbarte kuppelartige Erhebungen jeweils über Sattelflächen miteinander verbunden sind und die wannenartigen Vertiefungen auch über Sattelflächen miteinander verbunden sind.

Der Schritt des Verbindens der Deckschichten mit der/den Mittellage(n) kann durch übliche auf dem Fachgebiet verwendete Verfahren erfolgen, wobei ein Verblinden durch Kleben, Schweißen, Löten, Nieten und/oder Schrauben bevorzugt ist.

Darüber hinaus stellt die vorliegende Erfindung die Verwendung des vorstehend definierten Sandwichelements im Rohbau, Hochbau, Fertigbau, Ausbau, Innenausbau, zum Schall- und Wärmeschutz, für Inneneinrichtungen, Möbel, für Türen und Türfüllungen, Dekorationen, im Fahrzeugbau, Caravanbau, Schiffsinnenausbau, Flugzeuginnenausbau, Landwirtschaft und in der Verpackungstechnik bereit.

Auch eine Verwendung des erfindungsgemäßen Sandwichelements als Klimadecke ist möglich. Durch das wellenartige Profil der Mittellage entstehen linienförmige Hohlräume, in die vorzugsweise Rohre eingelegt werden können. Durch diese Rohre kann je nach Bedarf kaltes oder warmes Wasser gepumpt werden, so daß geheizt oder gekühlt werden kann. Klebt man beim Preßvorgang in die Rinnen die Rohre, so können die Rohre mit Gegenlager an der Mittellage optimal in die Vertiefungen gedrückt werden. Der Klebstoff läßt sich ganz oder teilweise auch durch eine Wärmeleitpaste ersetzen. Wenn bei der Herstellung der Deckschichten ein wärmeleitendes Material zugegeben wird (z.B. Metallspäne, Aluminiumkornpulver oder ähnliches), läßt sich eine sehr gute Wärmeleitfähigkeit erreichen.

Das erfindungsgemäße Sandwichelement läßt sich auch als Vakuumdämmelement verwenden. Ein derartiges Vakuumdämmelement läßt sich beispielsweise wie folgt herstellen. Auf den Deckschichten, vorzugsweise mit den vorstehend beschriebenen wannenartigen Vertiefungen, wird gemäß dieser Ausführungsform jeweils im Vakuumverfahren eine Schutzfolie, vorzugsweise eine Aluminiumfolie, aufgebracht. Die Aluminiumfolie wird mit Überstand auf die Deckschichten aufgebracht. Anschließend wird beispielsweise ein Dreischichtaufbau hergestellt. Die überstehende Aluminiumfolie kann dann im Randbereich zusammengeschweißt werden. Beim Vakuumieren legt sich dann die überstehende Aluminiumfolie in den Zwischenraum zwischen den Deckschichten. Danach ist das resultierende Sandwichelement in üblicher Weise zu bearbeiten.

## Patentansprüche

1. Sandwichelement, umfassend mindestens zwei Deckschichten und mindestens eine zwischen den Deckschichten angeordnete Mittellage in Form eines periodisch wiederkehrenden zweifach gekrümmten Schalentragwerks mit gegensinnigen Hauptkrümmungen.

2. Sandwichelement nach Anspruch 1, wobei die Deckschichten aus einem anderen Material als die Mittellage aufgebaut sind, insbesondere aus einem Plattenwerkstoff.

3. Sandwichelement nach einem der vorhergehenden Ansprüche, wobei die Mittellage aus einem Blech, einem perforierten Blech, einem Kunststoff, einem Material auf Holzbasis oder Cellulosebasis, einem mineralischen Werkstoff, einem Gewebe oder einem Gewebe mit einer Netz- oder Gitterstruktur aufgebaut ist.

4. Sandwichelement nach einem der vorhergehenden Ansprüche, wobei die Deckschichten mit der/den Mittellage(n) punktweise oder flächig verbunden sind.

5. Sandwichelement nach einem der vorhergehenden Ansprüche, wobei die Deckschichten mit der/den Mittellage(n) durch Kleben, Schweißen, Löten, Nieten und/oder Schrauben verbunden ist.

6. Sandwichelement nach einem der Ansprüche 4 oder 5, wobei zumindest eine Deckschicht wannenartige Vertiefungen aufweist, die vorzugsweise eine im wesentlichen halbkugelartige Form aufweisen, in denen Erhebungen der Mittellage aufgenommen sind.

7. Sandwichelement nach einem der Ansprüche 4 bis 6, wobei kuppelartige Erhebungen der Mittellage an der Kontaktfläche zu der Deckschicht abgeflacht sind.

8. Sandwichelement nach einem der Ansprüche 4 bis 7, wobei an dem Kontaktbereich zwischen Deckschicht und Mittellage eine flächige Klebeverbindung vorgesehen ist, die vorzugsweise eine meniskusartige Form aufweist, die sowohl die Deckschicht als auch einen größeren Bereich der Erhebungen der Mittellage kontaktiert,

9. Sandwichelement nach einem der vorhergehenden Ansprüche, wobei eine oder mehrere Deckschicht(en) strukturiert und/oder perforiert ist/sind.

10. Sandwichelement nach einem der vorhergehenden Ansprüche, wobei die kuppelartigen Erhebungen der Mittellage mit einem Material, beispielsweise einem Kunstharz, zumindest teilweise gefüllt sind.

11. Sandwichelement nach einem der vorhergehenden Ansprüche, wobei Zwischenräume zwischen der oder den Deckschicht(en) und der zumindest einen Mittellage einseitig oder beidseitig vollständig mit einem geeigneten Material, beispielsweise mit einem geschäumten Material, gefüllt sind.

12. Sandwichelement nach einem der vorhergehenden Ansprüche, wobei die Deckschichten eine plane oder gebogene Form aufweisen.

13. Sandwichelement nach einem der vorhergehenden Ansprüche, wobei das Sandwichelements in der folgenden Reihenfolge, eine Deckschicht, eine Mittellage, eine Mittellage und eine Deckschicht umfasst.

14. Sandwichelement nach Anspruch 13, wobei zwischen den beiden Mittellagen eine weitere Deckschicht angeordnet ist.

15. Sandwichelement nach Anspruch 14, wobei die zwischen den beiden Mittellagen angeordnete weitere Deckschicht eine bereichsweise durchbrochene bzw. durchschnittene Deckschicht mit Aussparungen ist.

## Claims

1. Sandwich element, comprising at least two cover layers and at least one middle layer, which is arranged between the cover layers and is in the form of a periodically recurring double-curved shell supporting structure with opposing principal curvatures.

2. Sandwich element according to Claim 1, the cover layers being composed of a different material than the middle layer, in particular of a sheet material.

3. Sandwich element according to one of the preceding claims, the middle layer being composed of a metal sheet, a perforated metal sheet, a plastic, a wood-based or cellulose-based material, a mineral material, a woven fabric or a woven fabric with a gauze or mesh structure.

4. Sandwich element according to one of the preceding claims, the cover layers being joined to the middle layer(s) at discrete points or over the surface area.

5. Sandwich element according to one of the preceding claims, the cover layers being joined to the middle layer(s) by adhesive bonding, welding, soldering or brazing, riveting and/or screwing or bolting.

6. Sandwich element according to one of claims 4 or 5, at least one cover layer having trough-like depressions, which preferably have a substantially hemispherical shape, in which elevations of the middle layer are received.

7. Sandwich element according to one of claims 4 to 6, dome-like elevations of the middle layer being flattened at the contact surface with the cover layer.

8. Sandwich element according to one of claims 4 to 7, an adhesive bond over the surface area being provided at the contact region between the cover layer and the middle layer, which preferably has a meniscus-like shape, which contacts both the cover layer and a larger region of the elevations of the middle layer.

9. Sandwich element according to one of the preceding claims, one or more cover layer(s) being structured and/or perforated.

10. Sandwich element according to one of the preceding claims, the dome-like elevations of the middle layer being filled at least partially with a material, for example a synthetic resin.

11. Sandwich element according to one of the preceding claims, cavities between the cover layer(s) and the at least one middle layer being filled completely on one or both sides with a suitable material, for example with a foamed material.

12. Sandwich element according to one of the preceding claims, the cover layers having a planar or arcuate form.

13. Sandwich element according to one of the preceding claims, the sandwich element comprising in the following order a cover layer, a middle layer, a middle layer and a cover layer.

14. Sandwich element according to claim 13, a further cover layer being arranged between the two middle layers.

15. Sandwich element according to claim 14, the further cover layer arranged between the two middle layers being a cover layer perforated or cut through at least in regions with recesses.

## Revendications

1. Elément sandwich comprenant au moins deux couches de recouvrement et au moins une couche centrale disposée entre les couches de recouvrement, en forme de structure en coque à double courbure revenant périodiquement avec des courbures principales en sens opposé.

2. Elément sandwich selon la revendication 1, dans lequel les couches de recouvrement sont fabriquées dans un autre matériau que la couche centrale, en particulier dans un panneau reconstitué.

3. Elément sandwich selon l'une des revendications précédentes, dans lequel la couche centrale est fabriquée dans une tôle, une tôle perforée, un plastique, un matériau à base de bois ou de cellulose, un matériau minéral, un tissu ou un tissu à structure réticulée.

4. Elément sandwich selon l'une des revendications précédentes, dans lequel les couches de recouvrement sont reliées à la/aux couche(s) centrale(s) point par point ou de manière plane.

5. Elément sandwich selon l'une des revendications précédentes, dans lequel les couches de recouvrement sont reliées à la/aux couche(s) centrale(s) par collage, soudage, brasage, par des rivets et/ou des vis.

6. Elément sandwich selon l'une des revendications 4 ou 5, dans lequel au moins une couche de recouvrement présente des creux en cuvette qui, de préférence, présentent une forme substantiellement hémisphérique, dans lequels des bossages de la couche centrale sont reçus.

7. Elément sandwich selon l'une des revendications 4 à 6, dans lequel des bossages, en forme de dôme, de la couche centrale sont aplatis à la surface de contact avec la couche de recouvrement.

8. Elément sandwich selon l'une des revendications 4 à 7, dans lequel un assemblage adhésif sur la surface est prévu à la zone de contact entre la couche de recouvrement et la couche centrale, l'assemblage adhésif présentant, de préférence, une forme en ménisque qui contacte non seulement la couche de recouvrement mais aussi une zone majeure des bossages de la couche centrale.

9. Elément sandwich selon l'une des revendications précédentes, dans lequel une ou plusieurs couche(s) de recouvrement est/sont structurée(s) et/ou perforée(s).

10. Elément sandwich selon l'une des revendications précédentes, dans lequel les bossages, en forme de dôme, de la couche centrale sont au moins partiellement remplis d'un matériau, par exemple d'une résine synthétique.

11. Elément sandwich selon l'une des revendications précédentes, dans lequel des espaces intermédiaires entre la/les couche(s) de recouvrement et la, au moins une, couche centrale sont remplis complètement d'un matériau approprié, par exemple d'un matériau mousse, sur un ou les deux côtés.

12. Elément sandwich selon l'une des revendications précédentes, dans lequel les couches de recouvrement présentent une forme plane ou pliée.

13. Elément sandwich selon l'une des revendications précédentes, dans lequel l'élément sandwich comprend dans l'ordre suivant, une couche de recouvrement, une couche centrale, une couche centrale et une couche de recouvrement.

14. Elément sandwich selon la revendication 13, dans lequel une autre couche de recouvrement est disposée entre les deux couches centrales.

15. Elément sandwich selon la revendication 14, dans lequel l'autre couche de recouvrement disposée entre les deux couches centrales est une couche de recouvrement perforée ou coupée au moins par zones avec des niches.
